Europäisches Patentamt

European Patent Office

Office européen des brevets

(11) Publication number: 0 374 853
A1

## EUROPEAN PATENT APPLICATION

(21) Application number: 89123488.2

(22) Date of filing: 19.12.89

(51) Int. Cl.5: G03C 1/015

(30) Priority: 19.12.88 JP 318381/88
19.12.88 JP 318382/88

(43) Date of publication of application:
27.06.90 Bulletin 90/26

(84) Designated Contracting States:
DE GB NL

(71) Applicant: FUJI PHOTO FILM CO., LTD.
210 Nakanuma Minami Ashigara-shi
Kanagawa(JP)

(72) Inventor: Ichikawa, Yasunori c/o Fuji Photo
Film Co., Ltd.
No. 210 Nakanuma
Minami Ashigara-shi Kanagawa(JP)
Inventor: Ohnishi, Hiroshi c/o Fuji Photo Film
Co., Ltd.
No. 210 Nakanuma
Minami Ashigara-shi Kanagawa(JP)
Inventor: Urabe, Shigeharu c/o Fuji Photo Film
Co., Ltd.
No. 210 Nakanuma
Minami Ashigara-shi Kanagawa(JP)
Inventor: Katoh, Akira c/o Fuji Photo Film Co.,
Ltd.
No. 210 Nakanuma
Minami Ashigara-shi Kanagawa(JP)

(74) Representative: Patentanwälte Grünecker,
Kinkeldey, Stockmair & Partner
Maximilianstrasse 58
D-8000 München 22(DE)

(54) Process of producing silver halide grains.

(57) A process of producing silver halide grains by supplying an aqueous solution of a water-soluble silver salt, an aqueous solution of a water-soluble halide, and an aqueous solution of a protective colloid to a mixer disposed outside of a reaction vessel containing an aqueous solution of a protective colloid. The protective colloid contains nuclei of silver halide grains for causing the crystal growth of silver halide grains. The process further includes mixing the aqueous solutions to form fine, silver halide grains, and immediately supplying the fine grains to the reaction vessel to perform the crystal growth of silver halide grains in the reaction vessel. The temperature of the aqueous solution of the protective colloid in the mixer is kept below 40° C. Further, a process of producing a photographic emulsion by supplying an aqueous solution of a water-soluble silver salt and an aqueous solution of a water-soluble halide to a mixer disposed outside of a reaction vessel for causing the nucleus formation and/or the crystal growth of silver halide grains while controlling the flow rates thereof. The process further includes the steps of: mixing the solutions while controlling the rotational speed of a propeller of the mixer to form fine, silver halide grains; immediately supplying the fine grains into the reaction vessel to perform the nucleus formation and/or the crystal growth of silver halide grains in the reaction vessel. The aqueous solution of the water-soluble silver salt and the aqueous solution of the water-soluble halide are previously diluted with a solution of a protective colloid and then supplied to the mixer.

## PROCESS OF PRODUCING SILVER HALIDE GRAINS

### FIELD OF THE INVENTION

This invention relates to a process of forming a photographic emulsion. More specifically, the invention relates to a process of producing a photographic emulsion containing silver halide grains having a completely homogeneous halide composition in each silver halide crystal and having no halide distribution among the grains.

### BACKGROUND OF THE INVENTION

The formation of silver halide grains is composed of two main steps, that is, a nucleus formation and a crystal growth. In T.H. James, The Theory of the Photographic Process, 4th edition (published by Macmillan, 1977), it is disclosed that "[a] nucleus formation is a step of forming new crystals and causing an abrupt increase in the number of crystals. Growth is where a new layer is added to an already existing crystal. Also, in addition to the aforesaid nucleus formation and crystal growth, two more steps, Ostwald ripening and recrystallization occur under a certain condition during the formation of a photographic emulsion grain. Ostwald ripening is liable to occur in the presence of a relatively high temperature and a solvent when the grain size distribution is broad. The re-crystallization is a step of changing the crystal composition."

That is, in the formation of silver halide grains, nuclei are mainly formed at the beginning and the growth of the crystals mainly occurs only on the already existing nuclei in the subsequent crystal growth.

In general, silver halide grains are produced by reacting an aqueous silver salt solution and an aqueous halide solution in an aqueous colloid solution in a reaction vessel. For this purpose, there is known a single jet process of placing an aqueous solution of a protective colloid, such as gelatin, and a halide in a reaction vessel and adding an aqueous silver salt solution to the solution along with stirring for a certain time. Also known is a double jet process of placing an aqueous gelatin solution in a reaction vessel and adding an aqueous halide solution and an aqueous silver salt solution to the solution for a certain time.

In the two processes, the double jet process is superior in that silver halide grains having a narrower grain size distribution are obtained and, further, the halide composition is desirably changed with the growth of the silver halide grains.

Also, it is known that the nucleus formation of silver halide grains is greatly influenced by the concentration of silver ions (and/or halogen ions) in a reaction system, the concentration of a silver halide solvent, the supersaturation, the temperature, etc. In particular, the heterogeneity of the silver ion concentration or the halogen ion concentration formed by an aqueous silver salt solution and an aqueous halide solution added to a reaction vessel causes the variation of a supersaturation and a solubility in the reaction vessel according to each concentration, thereby the nucleus formation rate differs throughout the whole reaction system in the reaction vessel to cause a heterogeneity in silver halide crystal nuclei formed.

In order to avoid the occurrence of heterogeneity, it is necessary to quickly and uniformly mix the aqueous silver salt solution and the aqueous halide solution being supplied to an aqueous colloid solution in a reaction vessel in order to provide a uniform silver ion concentration and/or the halogen ion concentration in the reaction vessel where the reaction of the silver salt and halide(s) occur. However, in the conventional process of adding an aqueous halide solution and an aqueous silver salt solution to the surface of an aqueous colloid solution in a reaction vessel, portions having high concentrations of halide ions and silver ions form near the addition or supply locations of each reaction solution, which makes it difficult to produce homogeneous or uniform silver halide grains. As a method of improving the local difference in the concentrations of the halogen ions and silver ions, several techniques are disclosed in U.S. Patent Nos. 3,415,650 and 3,692,283 and British Patent No. 1,323,464.

In these methods, a hollow rotary mixer (filled with an aqueous colloid solution and having the inside preferably divided into upper and lower chambers by a disc-form partition plate) having slits in the cylindrical wall thereof is disposed in a reaction vessel filled with an aqueous colloid solution such that the rotary shaft thereof is perpendicular. Further, an aqueous halide solution and an aqueous silver salt solution are separately supplied into the mixer, which is rotated at a high speed, from the upper and lower open ends through supply pipes to rapidly mix the solutions and react the halides and the silver salts (i.e., when

2

the mixer is divided into upper and lower chambers by a partition disc, each of the aqueous halide solution and the aqueous silver salt solution supplied to the two chambers, respectively, is diluted by an aqueous colloid solution filled in each chamber and the diluted solutions are quickly mixed near the outlet slit of the mixer to perform the reaction). The silver halide grains thus formed are discharged into the aqueous colloid solution in the reaction vessel by the centrifugal force caused by the rotation of the mixer to form silver halide grains.

On the other hand, JP-B-55-10545 (the term "JP-B" as used herein means an "examined published Japanese patent application") discloses a technique of improving the local difference of the concentrations to prevent the occurrence of the heterogeneous growth of silver halide grains. In the aforesaid process, an aqueous halide solution and an aqueous silver salt solution are separately supplied into a mixer filled with an aqueous colloid solution from the lower open end through supply pipes, the mixer being disposed in a reaction vessel filled with an aqueous colloid solution. Further, both of the solutions are rapidly mixed by a lower stirring blade (turbine blade) provided in a lower portion in the mixer to grow silver halide grains, and the silver halide grains thus grown are immediately discharged into the aqueous colloid solution in the reaction vessel from an upper opening of the mixer by an upper stirring blade provided on an upper portion of the aforesaid stirring blade.

Also, JP-A-57-92523 (the term "JP-A" as used herein means an "unexamined published Japanese patent application") discloses a production process for silver halide grains for preventing the occurrence of local heterogeneity of the concentrations of halide ions and silver ions. In the process, an aqueous halide solution and an aqueous silver salt solution are separately supplied into a mixer filled with an aqueous colloid solution from the lower open end thereof, the mixer being disposed in a reaction vessel filled with an aqueous colloid solution to dilute the solutions with the aqueous colloid solution. Further, the solutions are rapidly mixed by a lower stirring blade provided in a lower portion of the mixer, and silver halide grains thus grown are immediately discharged into the aqueous colloid solution in the reaction vessel from an upper opening of the mixer. Both of the reaction solutions diluted with the aqueous colloid solution are then passed through a space formed between the inside wall of the mixer and the outside portion of the end of the stirring blade without being passed through the space between the stirring blades. Thus, both of the reaction solutions are rapidly mixed under shearing to form silver halide grains.

However, in the aforementioned processes, the occurrence of the local heterogeneity of the silver ion concentration and the halogen ion concentration in the reaction vessel is surely prevented, but the heterogeneity of the concentrations still exists in the mixer and in particular, a considerably large concentration variation exists near the nozzles for supplying the aqueous silver salt solution and the aqueous halide solution, the lower portion of the stirring blade, and the stirring portion. Furthermore, silver halide grains formed in the mixer are passed through the portion having such a heterogeneous concentration distribution and, in particular, the silver halide grains rapidly grow in such a portion. That is, in the aforesaid processes, since the concentration distribution or variation exists in the mixer and the growth of silver halide grains rapidly occurs in the mixer, the object of homogeneously forming nuclei and growing silver halide grains in a state having no concentration variation cannot be achieved.

For solving the problem of the heterogeneous distribution of the silver salt ion concentration and the halogen ions by more completely mixing the aqueous silver salt solution and the aqueous halide solution, an attempt has been made to dispose a mixer separately from a reaction vessel and to supply an aqueous silver salt solution and an aqueous halide solution to the mixer followed by a step of rapidly mixing the solutions to form silver halide grains. For example, USP 4,171,224 and JP-B-48-21045, disclose a process and an apparatus for producing silver halide grains by circulating an aqueous colloid solution (containing silver halide grains) in a reaction vessel at the bottom of the reaction vessel by means of a pump, disposing a mixer in the circulating route, supplying an aqueous silver salt solution and an aqueous halide solution to the mixer, and rapidly mixing the aqueous solutions in the mixer to form silver halide grains.

Also, U.S. Patent No. 3,897,935 discloses a process of circulating an aqueous protective colloid solution (containing silver halide grains) in a reaction vessel at the bottom of the reaction vessel by means of a pump and adding an aqueous halide solution and an aqueous silver salt solution into the circulation system.

JP-A-53-47397 discloses a process and an apparatus for producing silver halide grains by circulating an aqueous protective colloid solution (containing a silver halide emulsion) in a reaction vessel by means of a pump, including first adding an aqueous solution of an alkali metal halide into the circulation system followed by uniformly diffusing the aqueous halide solution in the aqueous colloid solution, and then adding an aqueous silver salt solution into the circulation system followed by a mixing step to form silver halide grains.

However, although in the aforesaid processes, the flow rate of an aqueous solution in a reaction vessel being circulated in the circulation route and the stirring efficiency of a mixer can be independently changed and the formation of silver halide grains can be performed under a more homogeneous concentration distribution condition, the silver halide crystals sent from the reaction vessel together with an aqueous protective colloid solution ultimately cause rapid grain growth at the addition or injection inlets of the aqueous silver salt solution and the aqueous halide solution. Accordingly, it is practically impossible to prevent the occurrence of the concentration variation at the mixing portion or near the injection inlets of the aqueous silver salt solution and the aqueous halide solution as described above, and thus, the object of homogeneously forming silver halide grains in a state having no variation of the concentrations has not yet been attained.

## SUMMARY OF THE INVENTION

The object of this invention is to solve the aforesaid problems of the conventional production processes whereby silver halide grains are grown in a state of heterogeneous concentrations of silver ions and halogen ions thereby forming heterogeneous silver halide grains (grain sizes, crystal habit, the halogen distribution among and in silver halide grains, and the distribution of reduced silver nuclei among and in the grains).

The inventors previously proposed a process of supplying an aqueous solution of a water-soluble silver salt and an aqueous solution of a water-soluble halide to a mixer disposed outside of a reaction vessel for causing the nucleus formation or crystal growth of silver halide grains including the steps of forming silver halide grains followed by a mixing step to form fine silver halide grains, immediately supplying the fine grains into the reaction vessel or into a reaction vessel containing an aqueous protective colloid solution, and forming silver halide grains in the reaction vessel (Japanese Patent Application 63-195778). Further, a process of causing a crystal growth of silver halide grains in the same manner as above was proposed (Japanese Patent Application 63-7851). The present invention relates to a further improvement of these inventions.

Thus, according to this invention, there is provided a process of producing silver halide grains by supplying an aqueous solution of a water-soluble silver salt, an aqueous solution of a water-soluble halide, and an aqueous solution of a protective colloid to a mixer disposed outside of a reaction vessel. The reaction vessel contains an aqueous solution of a protective colloid, the colloid contains nuclei of silver halide grains for causing the crystal growth of silver halide grains. The process further includes mixing the aqueous solutions to form fine, silver halide grains, and immediately supplying the fine grains to the reaction vessel to perform the crystal growth of silver halide grains in the reaction vessel, wherein the temperature of the aqueous solution of the protective colloid in the mixer is kept below 40° C.

Also provided is a process of producing silver halide grains as set forth immediately above, wherein the protective colloid of the aqueous solution thereof is a low-molecular weight gelatin having a molecular weight of not more than 20,000.

Further, the aforesaid object can be attained by a process of producing a photographic emulsion by supplying an aqueous solution of a water-soluble silver salt and an aqueous solution of a water-soluble halide to a mixer disposed outside of a reaction vessel for causing the nuclear formation and/or the crystal growth of silver halide grains while controlling the flow rates thereof. The process further includes the steps of: mixing the solutions while controlling the rotational speed of a propeller of the mixer to form fine, silver halide grains; and immediately supplying the fine grains into the reaction vessel to perform the nucleus formation and/or the crystal growth of silver halide grains in the reaction vessel. The aqueous solution of the water-soluble silver salt and the aqueous solution of the water-soluble halide are previously diluted with a solution of a protective colloid and then supplied to the mixer.

## BRIEF EXPLANATION OF DRAWINGS

Fig. 1 is a schematic view showing a system for carrying out the production process for silver halide grains of this invention;

Fig. 2 is a flow diagram explaining the relation between the mixer and the reaction vessel in Fig. 1;

Fig. 3 is a sectional view of an example of the mixer in Fig. 1 and Fig. 2;

Fig. 4 is a schematic view showing a system for carrying out the production process for a photographic emulsion of this invention;

Fig. 5 is a flow diagram explaining the relation of the mixer and the reaction vessel in Fig. 4; and

Fig. 6 is a cross sectional view of the mixer shown in Fig. 5.

## DETAILED DESCRIPTION OF THE INVENTION

The "nuclei", in this invention, are silver halide grains in a stage during the formation of the silver halide grains, wherein the number of silver halide crystals is changing. On the other hand, such silver halide grains which are in a stage of causing only a crystal growth of silver halide crystals and mainly causing a crystal growth on nuclei, without changing the number, are referred to as grains causing growth only.

In the nucleus formation stage, the generation of new nuclei, the dissolution of already existing nuclei, and also the growth of nuclei occur simultaneously.

In this case, it is important that no growth of silver halide grains occur in the reaction vessel due to the addition of an aqueous silver salt solution and an aqueous halide solution. Furthermore, it is important that no circulation of an aqueous protective colloid solution (containing silver halide grains) occurs from the reaction vessel into the mixer.

Thus, the process of this invention is completely different from the conventional processes and is a novel process for obtaining heterogeneous silver halide grains.

In the process of this invention, a nucleus formation is first performed in a reaction vessel containing an aqueous protective colloid solution. The nucleus formation is performed according to a conventional process.

First, the nuclei of silver halide grains which are used in this invention can be prepared by the process described in P. Glafkides, Chimie et Physique Photographique, (published by Paul Montel Co., 1967), G.F. Duffin, Photographic Emulsion Chemistry, (published by The Focal Press Co., 1966), V.L. Zelikman et al., Making and Coating Photographic Emulsion, (published by The Focal Press Co., 1964). That is, an acid process, a neutralization process, an ammonia process, etc., may be used as a system for reacting a soluble silver salt and a soluble halide, a single jet process, a double jet process, or a combination thereof may be used.

A so-called reverse mixing process for forming silver halide grains in the presence of excess silver ions can also be used. An example of a double jet process that can also be used, is the so-called controlled double jet process of keeping a constant pAg in a liquid phase for forming silver halide gains. According to the process, a silver halide emulsion containing silver halide grains, having a regular crystal form and also having grain sizes which are almost uniform, is obtained.

A mixture of two or more kinds of silver halide emulsions separately prepared may be used.

In the preparation of the nuclei of silver halide grains, it is preferred that the halogen composition is uniform. Also, when the core of the silver halide grains is silver iodobromide, it is preferred to use a double jet process or a controlled double jet process.

The pAg during the preparation of the nuclei depends upon the reaction temperature and the type of silver halide solvent, but is preferably from 7 to 11. Also, the use of a silver halide solvent is preferred since the grain growth is performed in a short period of time. A silver halide solvent which is well known in the art, such as ammonia, thioether, etc., can be used.

The form of the nuclei may be tabular, spherical, or twin system as well as octahedral, cubic, tetradecahedral, or a mixed system thereof.

Also, the nuclei may be poly-dispersed or mono-dispersed, but are preferably mono-dispersed.

For obtaining silver halide grains having uniform grain sizes, it is preferred to quickly grow the silver halide grains in the range not exceeding the critical supersaturation using a process of changing the addition or supply rates of an aqueous solution of silver nitrate and an aqueous solution of alkali halide(s) according to the growing rate of silver halide grains as described in British Patent No. 1,535,016 and JP-B-48-36890 and USP 3,672,900, or a process of changing the concentrations of aqueous solutions as described in U.S. Patent No. 4,242,445 and JP-A-55-158124. These processes are preferably used in the case of introducing a coating layer as described hereinafter since, in these processes, each silver halide grain is uniformly coated without causing the re-formation of nuclei.

In the step of forming the nuclei of silver halide grains or of physical ripening of silver halide grains, a cadmium salt, a zinc salt, a lead salt, a thallium salt, an iridium salt or a complex salt thereof, a rhodium salt or a complex salt thereof, or an iron salt or a complex salt thereof may co-exist.

After forming silver halide grains as nuclei in a reaction vessel, the nuclei are grown by the process of this invention. Also, in place of forming nuclei in a reaction vessel, silver halide grains which become the nuclei for grain growth are first prepared, the nuclei emulsion is then dissolved again and, after adding the solution to a reaction vessel, silver halide grains are grown by using the process of this invention.

Also, in place of using the aforesaid nuclei emulsion, silver halide grains are prepared by first performing the nucleus formation and grain growth, the grains are then dissolved again and added to a reaction vessel, and the grain growth is performed using the dissolved grains as the core grains according to the process of this invention. Furthermore, after growing silver halide grains by the process of this invention, the grains may be further grown by a conventional process, that is, by adding an aqueous solution of silver nitrate and an aqueous halide solution to the reaction vessel containing the silver halide grains.

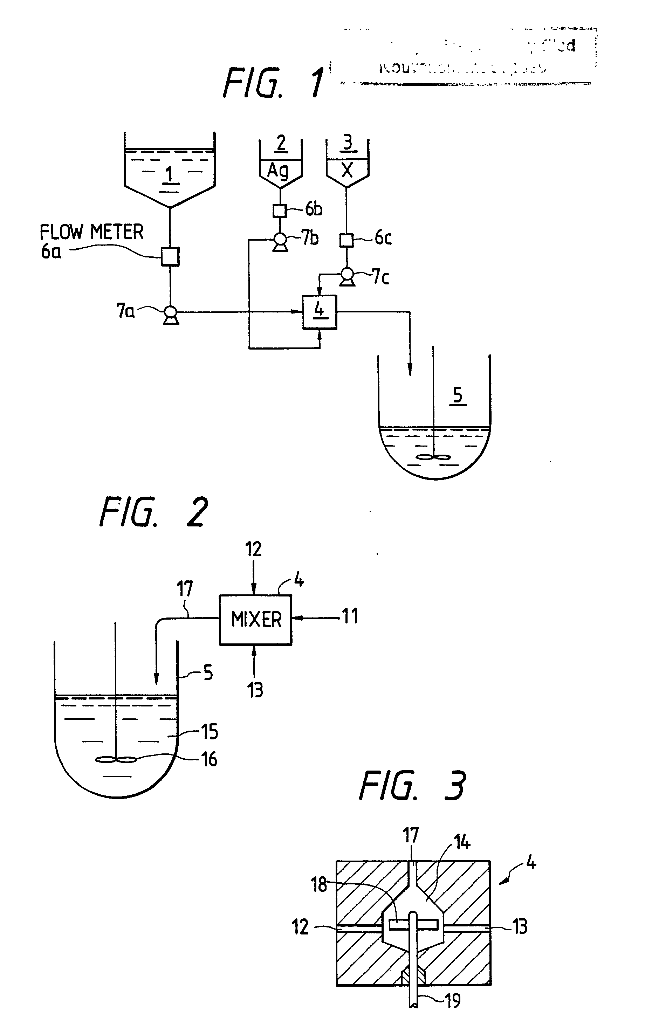

A system for carrying out the crystal growing process of this invention is shown in Fig. 1.

The system shown in Fig. 1 is composed of a tank 1 for preparing a gelatin solution for dilution, a tank 2 for preparing a silver salt solution, a tank 3 for preparing a halide solution, a mixer 4 for mixing the silver salt solution and the halide solution, and a reaction vessel 5 for receiving the reaction mixture from the mixer and growing silver halide grains.

Also, the flow rates of these solutions are detected by flow meters 6a, 6b, and 6c disposed in conduits which lead to the mixer, and the rotational speeds of pumps 7a, 7b, and 7c are controlled such that the values of the flow rates equal the values supported by the formulation.

The mixer is equipped with a stirring blade in the reaction chamber (as will be described below) and the rotational speed of the blade is controllable for controlling the reaction condition. Also, for the flow meters 6a, 6b, and 6c, any flow meters may be used as long as they can detect the flow rates of the added solutions and, for example, electromagnetic flow meters, Karumano flow meters, etc., can be used.

As concerns the pumps, any pumps can be used as long as they can pump the solutions with the correct flow rate without deviation thereof and, for example, gear pumps, snake pumps, etc., may be used.

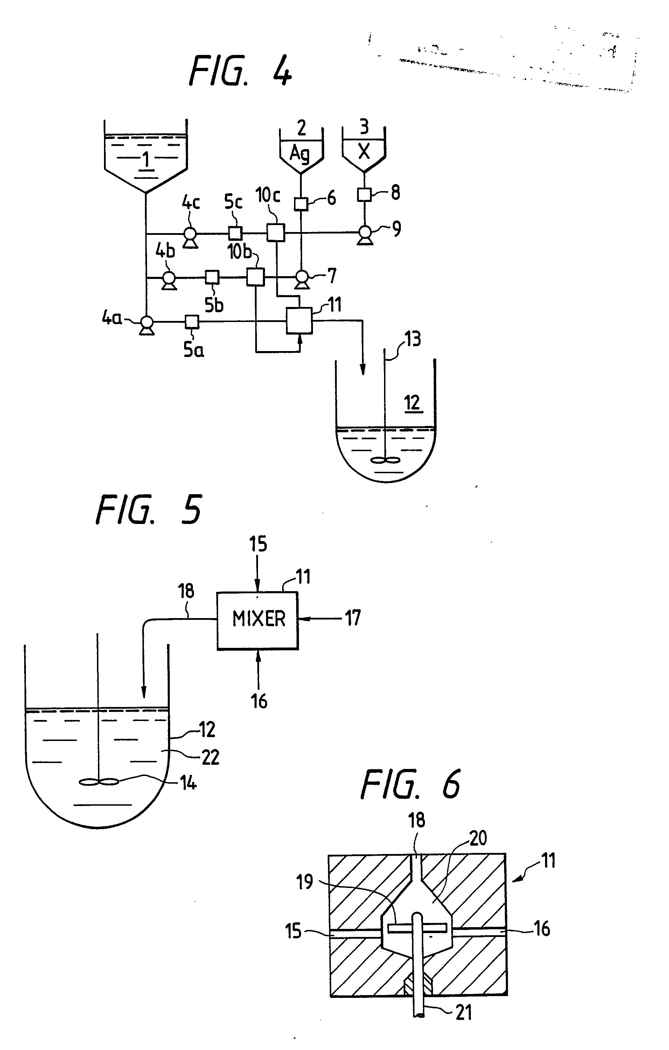

In Fig. 2, a reaction vessel 5 contains an aqueous protective colloid solution. The aqueous protective colloid solution is stirred by a propeller 16 disposed on a rotary shaft. After first adding silver halide grains as nuclei to the reaction vessel or after first forming nuclei in the reaction vessel, an aqueous silver salt solution, and aqueous halide solution, and an aqueous protective colloid solution are introduced into the mixer 4 disposed outside of the reaction vessel through addition systems or conduits 12, 13 and 11, respectively. It is noted that a portion of the aqueous protective colloid solution may be, if necessary, added together with the aqueous halide solution and/or the aqueous silver salt solution as described below with respect to Figs. 4-6. These solutions are quickly and strongly mixed in the mixer and immediately thereafter, they are introduced into the reaction vessel 5 by a system or conduit 17.

Fig. 3 shows the details of the mixer 4. A rotary shaft 19 is disposed in a reaction chamber 14 of the mixer 4, and a stirring blade or propeller 18 is disposed on the rotary shaft 19. An aqueous silver salt solution, an aqueous halide solution, and an aqueous protective colloid solution are added to the reaction chamber through the three inlet conduits 12, 13, and 11, respectively.

By rotating the rotary shaft at a high speed (higher than 1,000 r.p.m., preferably higher than 2,000 r.p.m., and more preferably higher than 3,000 r.p.m.), the solution containing very fine silver halide grains formed by rapidly and strongly mixing the aforesaid solutions is immediately introduced into the reaction vessel 5 through the conduit 17 to the reaction vessel. After the very fine silver halide grains formed in the mixer are introduced into the reaction vessel 5, the grains are easily dissolved to form silver ions and halogen ions again because of the fineness of the grain sizes and thereby cause homogeneous grain growth.

The halide composition of the very fine silver halide grains is selected to be same as the halide composition of the desired silver halide grains. The very fine grains introduced into the reaction vessel 5 are dispersed in the reaction vessel by stirring in the reaction vessel 5 and halogen ions and silver ions of the desired halide composition are released from each fine grain. The silver halide grains formed in the mixer 4 are very fine in size, the number of the grains is very large, and since the silver ions and halogen ions (in the case of the growth of mixed crystals, the composition of the halogen ions is the same as the desired halogen ion composition) and are released from such a large number of grains and the release occurs throughout the entire protective colloid in the reaction vessel 5, the result is completely homogeneous nucleus formation and crystal growth.

In this case, it is important that the silver ions and the halogen ions are not added to the reaction vessel 5 as aqueous solutions, and that the aqueous protective colloid solution in the reaction vessel 5 is not recycled into the mixer 4. In this respect, the process of this invention is completely different from conventional processes and, thereby, the invention can have an astonishing effect on the homogeneous growth of silver halide grains.

The silver halide fine grains formed in the mixer show a very high solubility since the grain sizes are fine. When the fine grains are added to the reaction vessel, they are dissolved to form silver ions and halogen ions again, and these ions are deposited on the silver halide grains already existing in the reaction

6

vessel to cause a grain growth. However, in this case, the fine grains cause a so-called Ostwald ripening with each other to increase the grain sizes. If the sizes of the fine silver halide grains become large, the solubility thereof is reduced to delay the dissolution of the grains in the reaction vessel and to greatly reduce the growing rate of the silver halide grains, and, in some cases, the grains are no longer dissolved and, on the contrary, the grains themselves become nuclei to cause grain growth.

Fig. 4 is a schematic view showing a system for carrying out the process of this invention for producing a photographic emulsion.

In Fig. 4, the system of this invention has a tank 1 for preparing a diluent and liquid-preparation tanks composed of a tank 2 for preparing an Ag (silver salt) solution and a tank 3 for preparing an X (halide) solution. The tank 1 is connected to a pump 4a for sending liquid into a mixing chamber 11. A flow meter 5a is provided for controlling the flow rate of the liquid. A pump 4b for sending liquid to a mixer 10b for diluting the Ag solution and a flow meter 5b for controlling the flow rate of the liquid are provided. A pump 4c for sending liquid to a mixer 10c for diluting the X solution and a flow meter 5c for controlling the flow rate of the liquid are provided.

Also, the conduits for sending the Ag solution and the X solution have pumps 7 and 9 for pumping the solutions to the mixers and flow meters 6 and 8 for controlling the flow rates, respectively. The solutions are completely mixed with diluents by the mixers 10b and 10c, respectively, and further added to a mixer 11. The mixture formed by completely mixing the diluent, the Ag solution and the X solution in the mixer 11 is added to a reaction vessel 12 having a stirrer 13 in which the grain growth is performed by the mechanism described above.

In Fig. 5, the relation between the mixer and the reaction vessel is explained.

First, the reaction vessel 12 contains an aqueous protective colloid solution 22. The aqueous protective colloid solution is stirred by a propeller 14 disposed on a rotary shaft. The mixer 11 is disposed outside of the reaction vessel. An aqueous silver salt solution, an aqueous halide solution, and, if necessary, an aqueous protective colloid solution are introduced to the mixer 11 through addition systems or conduits 15, 16 and 17, respectively. In this case, the aforesaid aqueous silver salt solution and the aforesaid aqueous halide solution are previously diluted with a solution of a protective colloid and then supplied to the mixer 11.

These solutions are then quickly and strongly mixed in the mixer and immediately introduced into the reaction vessel 12 by a system or conduit 18.

Fig. 6 shows the details of the mixer 11.

The mixer 11 has therein a reaction chamber 20 and a stirring blade 19 disposed on a rotary shaft 21 which is positioned in the reaction chamber 20. The aqueous silver salt solution, aqueous halide solution, and aqueous protective colloid solution are added to the reaction chamber 20 through the three inlet conduits 15, 16 and 17 (the last of which is omitted from the Fig. 6).

By rotating the rotary shaft at a high speed (higher than 1,000 r.p.m., preferably higher than 2,000 r.p.m., and more preferably higher than 3,000 r.p.m., the solution containing the very fine grains formed by quickly and strongly stirring is immediately introduced into the reaction vessel through the conduit 18. After thus introducing the very fine grains formed in the mixer into the reaction vessel 12, the very fine grains are easily dissolved owing the fineness of the grain sizes to again form silver ions and halogen ions, thereby a homogeneous nucleus formation and/or crystal growth occur.

The halide composition of the very fine grains is previously selected to be same as the halide composition of desired silver halide grains.

The very fine grains introduced into the reaction vessel 12 are dispersed in the reaction vessel 12 by stirring in the reaction vessel and also halide ions and silver ions of the desired halide composition are released from each fine grain. In this case, the grains formed in the mixer 11 are very fine and the number of grains is very large. Thus, since the silver ions and the halogen ions (in the case of growing mixed crystals, the composition of the halogen ions is the same as the desired halogen ion composition) are released from such a large number of the grains and the release occurs throughout the entire protective colloid in the reaction vessel 12, the result is completely homogeneous nucleus formation and/or crystal growth. In this case, it is important that the silver ions and the halogen ions are not added to the reaction vessel 12 as aqueous solutions, and also that the aqueous protective colloid solution in the reaction vessel 12 is not recycled into the mixer 11.

In addition, for the addition pumps of this invention, any pumps giving an accurate flow rate without deviation thereof may be used. For example, gear pumps, snake pumps, etc., may effectively be used. Also, for the flow meters, any flow meters which can correctly detect the flow rate can be used and, for example, an electromagnetic flow meter, a Karumano flow meter, etc., are effectively used.

As to the dilution of the Ag solution and the X solution, it is important that the concentration thereof is as low as possible and that the dilution not be too great owing to the restriction of the tank 1 for preparing the diluent, the tank 2 for preparing the Ag solution, and the tank 3 for preparing the X solution. It is important to dilute the solution to at least twice the amount of the Ag solution being added. Also, the addition or supply conditions can be varied, but the flow rate of the diluent is changed in conformity with the flow rate of the X solution being added, or the flow rate thereof is changed regardless of the flow rates of the Ag solution and the X solution. For the mixers 10a and 10b for mixing the Ag solution or the X solution with the diluent, a static mixer using a static method, etc., or a kinetic method using a stirrer disposed in the reaction chamber may be employed. In short, each solution should be sufficiently diluted by the diluent until the reaction of Ag and X is performed.

For the mixer 11, any mixer which can quickly dilute the diluent 17 and the previously diluted Ag solution 15 and the previously diluted X solution 16, each being introduced directly into the mixer 11 to cause the instant reaction of Ag and X, may be used. For example, a mixer having a mixing ability which is higher than the level obtained by a mixer having a stirring propeller in the reaction chamber 22 is sufficient.

In this respect, the process of this invention is completely different from the conventional processes and has an astonishing effect on the nucleus formation and/or the crystal growth of silver halide grains.

The fine grains formed in the mixer have a very high solubility since the grain sizes are very fine. When the fine grains are added to the reaction vessel, they are dissolved to form silver ions and halogen ions again and are deposited on very slight parts of the fine grains introduced into the reaction vessel to form silver halide nucleus grains and are deposited on the grains in the reaction vessel to cause the grain growth. In this case, however, since the fine grains have a high solubility, the fine grains cause sol-called Ostwald ripening to increase the grain sizes.

In this case, if the sizes of the fine grains being introduced into the reaction vessel are increased, the solubility thereof is reduced thereby, the dissolution in the reaction vessel is delayed, the nucleus formation rate is greatly reduced, and in some cases, the grains become indissoluble. Thus, an effective nucleus formation cannot be performed and, on the contrary, the grains themselves become nuclei to cause the growth thereof.

This problem is solved by the following three techniques in the process of this invention.

(1) After forming the fine grains in the mixer, the fine grains are immediately added to the reaction vessel.

As will be explained below, it is known to cause the formation of silver halide grains by re-dissolving a fine grain silver halide emulsion after previously forming fine silver halide grains to provide the fine grain emulsion and adding the dissolved fine grain emulsion to a reaction vessel containing silver halide grains becoming nuclei and a silver halide solvent. However, the very fine grains thus formed cause an Ostwald ripening in the grain formation step, washing step, re-dispersion step, and re-dissolving step to increase the grain sizes.

In this invention, by disposing the mixer at a position very near the reaction vessel and shortening the residence time of the added solution in the mixer, the fine grains formed are immediately added to the reaction vessel to prevent the occurrence of the Ostwald ripening. Practically, the residence time $\underline{t}$ of the solutions added to the mixer is shown by the following equation:

$$t = \frac{v}{a + b + c}$$

v: Volume (ml) of the reaction chamber of a mixer.
a: Addition amount (ml/min.) of a silver nitrate solution.
b: Addition amount (ml/min.) of a halide solution.
c: Addition amount of a protective colloid solution.

Accordingly, the residence time t of the solutions is influenced by the flow rates of the solutions added to the mixer and, hence, the manner and means for controlling the flow rates of the added solutions have important functions. For controlling the flow rates, a method of controlling each of the aforesaid a, b, and c and a method of controlling the sum of the aforesaid a, b, and c, while keeping the relation of a, b, and c at a constant ratio are necessary. However, any means which can perform the aforesaid method can be used for controlling the flow rates.

In the production process of this invention, the residence time t is not longer than 10 minutes, preferably not longer than one minute, and more preferably not longer than 20 seconds. Thus, the fine grains obtained in the mixer are immediately added to the reaction vessel without increasing the grain size.

For controlling the residence time, it is necessary to control the flow rates of the solutions being added to the mixer.

One of the features of this invention is in this aspect, namely, the flow rate of the sum of the aforesaid addition amounts a, b, and c is controlled while keeping the ratio thereof at a constant value.

(2) The solutions in the mixer are strongly and efficiently stirred.

In T.H. James, The Theory of the Photographic Process, page 93, he discloses that "another mode ranking with Ostwald ripening is coalescence ripening. Since in coalescence ripening, crystals which were previously far apart are directly brought into contact and adhere with each other to form large crystals, the grain sizes change suddenly. Both coalescence ripening and Ostwald ripening occur not only after finishing the deposition but also during the deposition."

The coalescence ripening described above is liable to occur when the grain sizes are very small and is particularly liable to occur when stirring is insufficient. In an extreme case, the grains are sometimes formed as coarse masses.

However, in this invention, since the closed type mixer as shown in Figs. 3 and 6 is used, the stirring blade in the reaction chamber thereof can be rotated at a high rotational speed. Hence, strong and efficient stirring for mixing, which has never been practiced in a conventional open type reaction vessel (i.e., when a stirring blade is rotated at a high rotational speed in the open type reaction vessel, the liquid in the vessel is scattered by the centrifugal force and also foam is formed, which makes such high speed stirring impractical), can be practiced. Thus, the occurrence of the aforesaid coalescence ripening is inhibited and very fine grains are obtained.

In this invention, the method and means for controlling the rotation number or speed of the stirring blade are one of the features and the range of the rotation number is at least 1,000 r.p.m., preferable at least 2,000 r.p.m., and more preferably at least 3,000 r.p.m. However, any means which can satisfy the aforesaid condition can be used for controlling the rotational speed.

(3) Injection of an aqueous protection colloid solution into the mixer.

The occurrence of the aforesaid coalescence ripening can be remarkably prevented by a protective colloid for silver halide, fine grains. In this invention, the aqueous protective colloid is added to the mixer by the following method.

(a) The aqueous protective colloid is independently injected into the mixer.

The concentration of the protective colloid is at least 0.2% by weight, and preferably at least 0.5% by weight and the flow rate thereof is at least 20%, preferably at least 50%, and more preferably at least 100% of the sum of the flow rate of the aqueous silver halide solution and the flow rate of the aqueous halide solution.

(b) The protective colloid is incorporated in the aqueous halide solution.

The concentration of the protective colloid is at least 0.2% by weight and preferably at least 0.5% by weight.

(c) The protective colloid is incorporated in the aqueous silver salt solution.

The concentration of the protective colloid is at least 0.2% by weight and preferably at least 0.5% by weight. When gelatin is used as the protective colloid, gelatin silver is formed by silver ions and gelatin and colloid silver is formed by the photodecomposition and the thermal decomposition of gelatin silver. Thus, in this case, the method of mixing the silver nitrate solution and the protective colloid solution immediately before use is preferred.

Also, the aforesaid method (a) may be used singly, or a combination of method (a) and method (b), or of method (a) and method (c) may be used, or a combination of methods (a), (b), and (c) may be used.

As a protective colloid for use in this invention, gelatin is usually used but other hydrophilic colloids can also be used. Practical examples thereof are described in Research Disclosure, Vol. 176, No. 17643 Paragraph IX, (December, 1978).

The sizes of the silver halide grains obtained by the aforesaid techniques (1) to (3) can be confirmed by placing the grains on a mesh and observing them through a transmission type electron microscope. In this case, the magnification of the electron microscope is preferably from 20,000 to 40,000 magnifications. The sizes of the fine grains obtained by the process of this invention are not larger than 0.06 $\mu$m, preferably not larger than 0.3 $\mu$m, and more preferably not larger than 0.01 $\mu$m.

U.S. Patent No. 2,146,938 discloses a process of growing coarse silver halide grains by mixing coarse grains having no adsorptive material adsorbed thereto and fine grains having no adsorptive material adsorbed thereto, or by slowly adding a fine grain emulsion to a coarse grain emulsion. However, the fine grain emulsion being added is a silver halide emulsion previously prepared and, hence, the aforesaid process is completely different from the process of the present invention.

USP 4,379,837 discloses a process of performing a grain growth by washing with water a fine grain emulsion prepared in the presence of a growth inhibitor, dispersing the emulsion followed by re-dissolving, and adding it to silver halide grains being grown. However, the process is completely different from the process of this invention for the same reason as above.

In T.H. James, The Theory of the Photographic Process, 4th edition, a Lippmann emulsion is cited as a fine grain emulsion and the mean grain size thereof is described to be less than 0.05 $\mu$m. It is possible to obtain fine grains having a mean grain size of less than 0.05 $\mu$m, but even if such fine grains are obtained, they are unstable and the grain sizes thereof are increased by Ostwald ripening. Also, when an adsorptive material is adsorbed onto silver halide grains as in the process of USP 4,379,837, the occurrence of Ostwald ripening can be prevented to some extent but the dissolving rate of the fine grains is reduced thereby, which is contrary to the intention of the present invention.

U.S. Patent Nos. 3,317,322 and 3,206,313 disclose a process of forming shells by mixing a silver halide emulsion as cores having a mean grain size of at least 0.8 $\mu$m, the emulsion having been subjected to a chemical sensitization, and a silver halide emulsion containing silver halide grains having a mean grain size of not larger than 0.4 $\mu$m, the emulsion having not been subjected to a chemical sensitization, and then ripening the mixed emulsion. However, since in the process, the fine grain emulsion used is an emulsion previously prepared and the two emulsions are mixed and ripened, the process is completely different from the process of this invention.

JP-A-62-99751 discloses a photographic element containing tabular silver bromide or silver iodobromide grains having a mean grain size of from 0.4 to 0.55 $\mu$m and having an aspect ratio of at least 8. Also, USP 4,672,027 discloses a photographic element containing tabular silver bromide or silver iodobromide grains having a mean grain size of from 0.2 to 0.55 $\mu$m. However, these examples disclose a technique of growing tabular silver bromide grains by adding, during the growth of the tabular silver bromide grains, an aqueous silver nitrate solution and an aqueous potassium bromide solution to a reaction vessel by a double jet method in the presence of a protective colloid (bone gelatin), and simultaneously supplying iodine thereto as a silver iodide emulsion (mean grain size of about 0.05 $\mu$m, bone gelation of 40 g/mol-Ag). In the process, an aqueous silver nitrate solution and an aqueous potassium bromide solution are added to the reaction vessel simultaneously with the addition of silver halide, fine grains and, hence, the process is completely different from the process of the present invention.

In USP 4,457,101 , it is disclosed that "silver, a bromide, and an iodide can be introduced in the form of fine silver halide grains dispersed in a dispersion medium at the beginning or in a grain growing step. That is, silver bromide grains, silver iodide grains, and/or silver iodobromide grains are introduced."

However, the above description is only a general description of using a fine grain emulsion for the formation of silver halide and does not show the process and the system of the present invention.

JP-A-62-124500 describes an example of growing host grains in a reaction vessel using very fine grains previously prepared, but in the process, a fine grain emulsion previously prepared is added and, hence, the process is completely different from the process of the present invention.

In the conventional processes described above, a fine grain emulsion is previously prepared and the emulsion is re-dissolved for use, thereby fine grains having fine grain sizes cannot be obtained. Accordingly, fine grains having relatively large grain sizes cannot be quickly dissolved in a reaction vessel and, thus, a very long time is required for completely finishing the dissolution thereof, or a large amount of a silver halide solvent must be used. In such a circumstance, for the grains being grown in a reaction vessel, the nuclei are formed in a very low saturation, which results in greatly broadening the grain size variation to cause the reduction of photographic tone, the reduction in sensitivity by the heterogeneity of the chemical sensitization (large size grains and small size grains cannot be simultaneously, most suitably chemically sensitized), the increase of fog, and the reduction of graininess.

Furthermore, in the conventional processes, there are many steps including grain formation, water washing, dispersion, cooling, storage, and re-dissolution, which increase the cost of production, and for the addition of the emulsion, there are many restrictions on the addition or supply systems as compared with the addition system for other solutions.

These problems are solved by the process of the present invention. That is, in the process of this invention, silver halide grains having very fine grain sizes are introduced into the reaction vessel, thereby the solubility of the fine grains is high. Accordingly, the dissolution rate is high and the silver halide grains being grown in the reaction vessel cause the nucleus formation and the grain growth under a high supersaturation condition. Therefore, the size distribution of the grains thus formed is not broadened. Furthermore, since the fine grains formed in the mixer are added to the reaction vessel as disclosed, there is no problem with the production cost.

In the process of this invention, when a silver halide solvent is added to the system in the reaction vessel, a higher dissolution rate of the fine grains and a higher growing rate of the grains in the reaction vessel is obtained.

As a silver halide solvent, there are water-soluble bromides, water-soluble chlorides, thiocyanates, thioethers, thioureas, etc.

For example, there are thiocyanates described in U.S. Patent Nos. 2,222,264, 2,448,534, and 3,320,069; ammonia; thioethers described in U.S. Patent Nos. 3,271,157, 3,574,628, 3,704,130, 4,297,439, and 4,276,345; thione compounds described in JP-A-53-144319, 53-82408, and 55-77737; amine compounds described in JP-A-54-100717; thiourea derivatives described in JP-A-55-2982; imidazoles described in JP-A-54-100717; and substituted mercaptotetrazoles described in JP-A-57-202531.

According to the process of this invention, the supplying rates of silver ions and halide ions to the mixer may be freely controlled. The supplying rates may be constant, but it is preferred to gradually increase the supplying rates. Such methods are described in JP-B-48-36890 and USP 3,672,900.

Furthermore, according to the process of this invention, the halogen composition during the grain growth may be freely controlled and in the case of, for example, silver iodide, it is possible to maintain a constant content of silver iodide, continuously increase or continuously decrease the content of silver iodide, or change the content of silver iodide at a desired time.

As one feature of this invention, the reaction temperature in the mixer is not higher than 60°C, preferably not higher than 50°C, and more preferably not higher than 40°C.

Furthermore, when the reaction temperature is not higher than 35°C as a feature of this invention, ordinary gelatin is liable to coagulate and, hence, the use of a low molecular weight gelatin having a mean molecular weight of not higher than 30,000 is preferred, and the use of gelatin having a mean molecular weight of not higher than 20,000 is more preferred.

The temperature of the protective colloid in the reaction vessel may be higher than 40°C, preferably higher than 50°C, and more preferably higher than 60°C.

Low molecular weight gelatin for use in this invention may be prepared as follows.

Ordinary gelatin having a mean molecular weight of about 100,000 is dissolved in water and a gelatin decomposing enzyme is added to the solution to cause the enzyme decomposition of the gelatin molecule. For the method, the description of R.J. Cox, Photographic Gelatin II, Pages 233-251 and pages 335-346, Academic Press, London, 1976 can be referred to. In this case, since the bonding position of the gelatin decomposed by the enzyme occurs at a specific structural position, a low molecular weight gelatin having a relatively narrow molecular weight distribution is obtained. In this case, as the enzyme decomposition time is longer, a lower molecular weight of gelatin is obtained. In another method, gelatin is hydrolyzed by heating it at a low pH (e.g., pH 1 to 3) or a high pH (e.g., pH 10 to 12).

Also, when a composition other than gelatin is used as the protective colloid, the restriction of temperature by gelation is removed and such a composition can be used for the dilution at a lower temperature.

In this invention, the aqueous silver salt solution and the aqueous halide solution are not added to the reaction vessel during the nucleus formation and/or the crystal growth, but prior to the nucleus formation, an aqueous halide solution or an aqueous silver salt solution can be added to the reaction vessel for controlling pAg of the solution in the reaction vessel. Also, for controlling pAg of the solution in the reaction vessel during the nucleus formation, an aqueous halide solution or an aqueous silver salt solution can be added thereto (temporarily or continuously). If necessary, for keeping pAg constant in the reaction vessel, an aqueous halide solution or an aqueous silver salt solution can be added by a so-called pAg control double jet method.

The production process of this invention is very effective for the production of various kinds of silver halide emulsions.

In the growth of silver halide grains which are mixed crystal grains, such as silver iodobromide, silver iodobromo-chloride, silver idochloride, and silver chlorobromide, a microscopic heterogeneity of the halide composition occurs when the grains are produced by conventional production processes. When, for example, a production process of obtaining a uniform halide distribution (i.e., a process of adding an aqueous halide solution having a definite halide composition and an aqueous silver halide solution to a reaction vessel to perform the grain growth) is applied, the occurrence of the heterogeneous distribution of halide can be easily confirmed by observing the transmitted images of the silver halide grains using a transmission type electron microscope.

The microscopic halide distribution can be observed by the direct method using a transmission type electron microscope described in J.F. Hamilton, Photographic Science and Engineering, Vol. 11, 57 (1967) and T. Shiozawa, Journal of the Society of Photographic Science and Technology of Japan, Vol. 35, No. 4, 213 (1972). That is, silver halide grains sampled from a silver halide emulsion under a safelight such that the grains are not printed out are placed on a mesh for the observation by an electron microscope and are observed by a transmission method in a state of being cooled by liquid nitrogen or liquid helium for preventing the occurrence of damage (i.e., print out) by electron rays.

In this case, as the acceleration voltage of the electron microscope becomes higher, clearer transmitted images are obtained, but the voltage is preferably 200 KV up to a grain thickness of 0.25 μm and 1,000 KV for grains having a thicker thickness.

Since the higher the acceleration voltage is, the greater the damage to the grains by the irradiated electron rays will be, it is preferred to cool the sample by liquid helium as opposed to liquid nitrogen.

The photographing magnification can properly be changed according to the grain size, but is generally from 20,000 to 40,000 magnifications.

In silver halide grains composed of a single halide, there is, as a matter of course, no heterogeneity in the halide distribution and hence only flat images are obtained in a transmission type electron microphotograph. On the other hand, in the case of mixed crystals composed of plural halides, a very fine annular ring-form striped pattern is observed.

For example, in the case of a transmission type electron microphotograph of tabular silver iodobromide grains, a very fine annular ring-form striped pattern is observed at the portion of the silver iodobromide phase.

The tabular grains were prepared by using tabular silver bromide grains as the core grains and forming a shell of silver iodobromide containing 10 mol% silver iodide on the outside of the core, and the structure can be clearly observed by a transmission type electron microphotograph. That is, since the core portion is silver bromide and, as a matter of course, homogeneous, a homogeneous flat image only is obtained. On the other hand, in the silver iodobromide phase, a very fine annular ring-form striped pattern can clearly be observed.

The interval of the striped pattern is very fine, e.g., along the order of 100 Å or less and the pattern shows a very microscopic heterogeneity.

It can be clarified by various methods that the very fine striped pattern shows the heterogeneity of the silver iodide distribution, but in a direct method, it can be concluded that when the grains are annealed under a condition wherein iodine ions can move in the silver halide crystals (e.g., for 3 hours at 250°C), the striped pattern completely vanishes.

No such annular ring-form striped pattern is observed in the tabular grains prepared according to the process of this invention and silver halide grains having a completely homogeneous silver iodide distribution are obtained according to the process of this invention. The position of the phase containing silver iodide in the silver halide grains may be the central portion of the silver halide grain or over the entire grain, or may be an outer portion thereof. Also, the phase containing silver iodide may be one or plural.

The silver iodide content in the silver iodobromide phase or silver iodochloride phase contained in the silver halide emulsion produced by the process of the invention is from 2 to 45 mol%, and preferably from 5 to 35 mol%. The total silver iodide content is at least 2 mol%, effectively at least 5 mol%, more preferably at least 7 mol%, and particularly preferably at least 12 mol%.

The process of this invention is also useful for the production of silver chlorobromide grains and silver chlorobromide grains having a completely homogeneous distribution of silver bromide (or silver chloride) are obtained by the process of this invention. The content of silver chloride is at least 10 mol%, and preferably at least 20 mol%.

Furthermore, the process of this invention is also very effective for the production of pure silver bromide or pure silver chloride. According to the conventional production processes, the existence of local distributions of silver ions and halogen ions in a reaction vessel is unavoidable and silver halide grains in the reaction vessel pass through the local heterogeneous portions and are in a state that is different from other homogeneous portions. Hence, a heterogeneity occurs in the grain growth, and also reduced silver or fogged silver is formed in the high concentration portions of silver ions. Accordingly, in silver bromide or silver chloride, there is certainly no heterogeneity in the halide distribution, but another form of heterogeneity, as described above, occurs.

On the other hand, the aforesaid problem is completely solved by the process of this invention.

The silver halide grains formed by the process of this invention can be, as a matter of course, used for a surface latent image type emulsion and can also be used for an internal latent image type emulsion and a direct reversal type emulsion.

In general, internal latent image-forming type silver halide grains are superior to surface latent image-forming type grains in the following respects.

(1) A space charge layer is formed in silver halide crystal grains, electrons generated by light absorption are directed to the inside of the grains, and positive holes are directed to the surface of the grains. Accordingly, if a latent image site (electron trap site), i.e., a sensitive speck, is formed in the inside of the grains, the recombination of the electron and the positive hole is prevented, the formation of latent images is performed at a high efficiency, and a high quantum sensitivity is realized.

(2) Since a sensitive speck exists in the interior of the grains, the sensitive speck is not influenced by moisture and oxygen and is excellent in storage stability.

(3) Since latent images formed by light exposure also exist in the interior of the grains, the latent images are not influenced by moisture and oxygen, and the latent image stability is very high.

(4) When the silver halide emulsion is color or spectrally-sensitized by adsorbing one or more sensitizing dyes to the surface of the silver halide grains, the light absorbing site (sensitizing dye for the surface) and the latent image site (sensitive speck in the inside) are separated from each other, thereby the occurrence of the recombination of the dye positive hole and electron is prevented. Thus, the occurrence of the specific desensitization of the color sensitization does not occur, and a high color-sensitized sensitivity is realized.

As described above, the internal latent image-forming type silver halide grains have the aforementioned advantages as compared to surface latent image-forming type silver halide grains. However, the silver halide grains have difficulty in the formation of the sensitive specks in the interior of the grains. For forming the sensitive speck in the interior of silver halide grains, after once forming grains as core grains, a chemical sensitization is applied thereto to form the sensitive speck on the surface of the core. Thereafter, silver halide is deposited on the core to form a so-called shell. However, the sensitive speck formed on the surface of the core grains by a chemical sensitization of the cores is liable to change at the formation of the shell and is, frequently, liable to be converted into inside fog. One of the reasons for this is that when the shell formation on the core occurs in the heterogeneous portion of concentrations (silver ion concentration and halogen ion concentration) as in conventional processes, the sensitive speck is damaged and is liable to be changed into fogged nuclei.

On the other hand, according to the process of this invention, the problem is solved and an internal latent image-forming type silver halide emulsion having much less inside fog is obtained. For the internal latent image-forming type silver halide grains, normal crystal and tabular silver halide grains are preferred. For the silver halide, there are silver bromide, silver iodobromide, and silver chlorobromide or silver choroido-bromide having a silver chloride content of not more than 30 mol%, but silver iodobromide having a silver iodide content of not more than 10 mol% is preferred.

In this case, the mol ratio of core/shell may be optional, but is preferably from 1/20 to 1/2, and more preferably from 1/10 to 1/3.

Also, in place of or together with the internal chemically sensitized nuclei, metal ions can be doped in the inside of the grains. The doping site may be the core or the interface of the core/shell.

As the metal dopant, cadmium salts, lead salts, thallium salts, erbium salts, bismuth salts, iridium salts, rhodium salts, or the complex salts thereof are used.

The metal ions are usually used in an amount of at least $10^{-6}$ mol per mol of the silver halide.

By growing the silver halide grains obtained by the process of this invention, silver halide grains having desired sizes and halide composition are grown.

In particular, in the case of mixed crystal silver halides such as silver iodobromide, silver iodochloride, silver chlorobromide, and silver iodobromo-chloride, it is preferred to perform the grain growth by the process of this invention in succession to the nucleus formation.

13

Also, if necessary, it is preferred to add the previously prepared fine grain emulsion to the reaction vessel followed by performing the grain growth. The details of these processes are described in Japanese Patent Applications 62-7851, 63-7852, and 63-7853. The silver halide grains thus obtained have "a completely homogeneous" halide distribution in both the nuclei and the grown phases and also the grain size variation is very small.

There is no particular restriction on the grain size of the completely homogeneous silver halide grains of this invention, but the grain sizes are preferably at least 0.3 $\mu$m, more preferably at least 0.8 $\mu$m, and particularly preferably at least 1.4 $\mu$m.

The form of the silver halide grains produced by the process of this invention may be regular crystal form (normal crystal grains) such as hexahedral, octahedral, dodecahedral, tetradecahedral, tetracodahedral, and octatetracosahedral; an irregular crystal form such as spherical and potato-form; various forms having at least one twin plane; and a hexagonal tabular form and triangular tabular form having two or three parallel twin planes.

The silver halide photographic emulsions obtained by the process of this invention can be used for various silver halide photographic materials and various additives, the photographic processing process thereof, etc., are described in JP-A-63-123042, 63-106745, 63-106749, 63-100445, 63-71838, 63-85547, Research Disclosure, Vol. 176, Item 17643, and ibid., Vol. 187, Item 18716.

The described portions of the aforesaid research disclosures are shown below.

| | | Additives | RD 17643 | RD 18716 |
|---|---|---|---|---|
| | 1. | Chemical Sensitizer | Page 23 | Page 648, right column |
| | 2. | Sensitizer Increasing Agent | | do |
| | 3. | Spectral Sensitizer, Super Color Sensitizer | Pages 23-24 | Page 648, right column to page 649, right column |
| | 4. | Whitening Agent | Page 24 | |
| | 5. | Fog Inhibitor and Stabilizer | Pages 24-25 | Page 649, right column |
| | 6. | Light Absorbent, Filter Dye, Ultraviolet Absorbent | Pages 25-26 | Page 649, right column to page 650, left column |
| | 7. | Stain Inhibitor | Page 25, right column | Page 650, left to right column |
| | 8. | Color Image Stabilizer | Page 25 | |
| | 9. | Hardening Agent | Page 26 | Page 651, left column |
| | 10. | Binder | Page 26 | do |
| | 11. | Plasticizer, Lubricant | Page 27 | Page 650, right column |
| | 12. | Coating Aid, Surface Active Agent | Pages 26-27 | do |
| | 13. | Static Inhibitor | Page 27 | do |
| | 14. | Color Coupler | Page 28 | Pages 647-648 |

The invention is explained by the following examples.

Example 1: Effect of Using Protective Colloid:

In the case of forming fine grains in the mixer 4 using the production system for silver halide grains as shown in Figs. 1-3, the effect of an aqueous protective colloid solution (diluent) was compared. That is, an aqueous silver nitrate solution and an equimolar amount of an aqueous potassium bromide solution being reacted therewith were added to the mixer 4 together with the following diluent and were reacted to form silver halide grains. In this case, the grain sizes of the grains ejected from the mixer 4 were compared.

Kind of Diluent:

A: Distilled water of a definite temperature.

B: Aqueous 2% gelatin solution.

The two samples formed were observed by a direct method transmission type electron microscope (20,000 magnification) by a cooling method and the mean grain sizes of the silver halides formed were compared.

The results showed that the mean size in the case of using diluent A was 0.08 μm and the mean size in the case of using diluent B was 0.02 μm.

Also, the silver halide grains formed by the aforesaid process were added to a mixture of seed crystals and an aqueous gelatin solution previously placed in the reaction vessel 5 to cause crystal growth and after 5 minutes had elapsed since the addition, the grains formed were sampled and the grains size was observed with the electron microscope. In the results, in the case of using diluent A, many fine grains were observed but in the case of using diluent B, no residue of the fine grains was observed.

Example 2: Temperature Effect, Effect of the Kind of Gelation:

In the case of forming fine silver halide grains by adding an aqueous silver nitrate solution, an equimolar amount of an aqueous potassium bromide solution being reacted therewith, and an aqueous 2% gelatin solution to the mixer 4, the temperature of the aqueous gelatin solution and the kind of gelatin in the diluent were changed. The temperature of the aqueous gelatin solution and the mean molecular weight of each gelatin are shown in Table 1 below.

An example of the production process of a photographic emulsion of this invention is shown below.

Table 1

| Condition | Temperature | Mean Molecular Weight |
|---|---|---|
| A | 50°C | 100,000 |
| B | 40°C | 100,000 |
| C | 40°C | 5,000 |
| D | 20°C | 100,000 |
| E | 20°C | 5,000 |

The fine grains formed under the aforesaid condition ejected from the mixer were sampled, observed by the electron microscope, and the mean grain sizes were compared. The results are shown in Table 2.

Table 2

| Condition | Mean Grain Size (μm) |
|---|---|
| A | 0.08 |
| B | 0.03 |
| C | 0.04 |
| D | Unmeasurable since the emulsion set at sampling |
| E | 0.01 |

As is clear from the above results, it can be seen that in Sample C and E prepared under conditions of a temperature of not higher than 40°C and a mean molecular weight of not more than 20,000, the mean grain size of the fine grains formed was fine.

That is, it can be seen that for homogeneously obtaining fine grains in the mixer 4, it is preferred that the temperature in the mixer 4 is low and the molecular weight of gelatin being used is low.

As is understood from the explanation of the specification, the production process for silver halide grains of this invention gives the following effects:

(1) Silver halide grains having a completely homogeneous halogen distribution as compared with silver halide grains formed in the conventional manner are obtained.

(2) The silver halide emulsion formed showed less fog.

(3) Silver halide emulsion excellent in sensitivity, gradation, graininess, sharpness, storage stability, and pressure resistance was obtained.

A further example of the production process of a photographic emulsion of this invention is shown below.

By the production process shown in Figs. 4-6, the following experiments were performed.

Comparison Example 3

50 ml/min each of an aqueous solution of 1 mol of silver nitrate and an aqueous solution of 1 mol of potassium bromide and 500 ml/min of an aqueous 2% gelatin solution for dilution was added to the mixer 11 through separate inlets 15 and 16, respectively to form fine silver halide grains.

Example 3

An aqueous 2% gelatin solution for dilution was added at a flow rate of 100 ml/min into the conduits for separately adding 50 ml/min each of an aqueous solution of 1 mol of silver nitrate and an aqueous solution of 1 mol of potassium bromide to the mixer. After completely mixing each mixture with static mixers 10a and 10b, respectively, the mixtures were added to the mixer 11 through addition conduits 15 and 16, respectively. Also, a remaining aqueous gelatin solution for dilution was directly added to the mixer 11 at a flow rate of 300 ml/min. Thus, fine silver halide grains were formed.

The fine silver halide grains thus prepared were sampled, observed by a direct transmission type electron microscope (20,000 magnification) by a cooling method, and the mean grain sizes of the fine grains formed were compared.

The results showed that the mean grain size of the silver halide grains prepared in the process of Comparison Example 3 was 0.04 μm, while the mean grain size of the fine grains prepared by the process of Example 3 was 0.01 μm.

That is, by adding an aqueous silver halide solution and an aqueous halide solution to the mixer after diluting the solutions with an aqueous protective colloid solution, finer silver halide grains are obtained.

As is clear from the aforesaid experiments and the explanation, by obtaining finer and completely homogeneous silver halide grains in the mixer by the production process of this invention, the following advantages are obtained.

(1) Silver halide grains having a completely homogeneous halide distribution are obtained as compared with silver halide grains obtained by conventional raw material addition systems.

(2) The silver halide grains formed have less fog.

(3) A silver halide emulsion excellent in sensitivity, gradation, graininess, sharpness, storage stability and pressure resistance is obtained.

**Claims**

1. A process of producing silver halide grains comprising the steps of:
supplying an aqueous solution of a water-soluble silver salt, an aqueous solution of a water-soluble halide, and an aqueous solution of a protective colloid to a mixer disposed outside of a reaction vessel containing an aqueous solution of a protective colloid, said protective colloid in the reaction vessel containing nuclei of silver halide grains for causing a crystal growth of silver halide grains;
mixing said aqueous solutions to form fine, silver halide grains; and
immediately supplying the fine grains to the reaction vessel to perform the crystal growth of silver halide grains in the reaction vessel, wherein the aqueous solution of the protective colloid in the mixer is kept at a temperature below 40° C.

2. The process of producing silver halide grains according to claim 1, further wherein the protective colloid of the aqueous solution thereof is a low-molecular weight gelatin having a molecular weight of not more than 20,000.

3. A process of producing a photographic emulsion comprising the steps of:
supplying at various flow rates an aqueous solution of a water-soluble silver salt and an aqueous solution of a water-soluble halide to a mixer disposed outside of a reaction vessel for causing at least one of a nucleus formation and a crystal growth of silver halide grains while controlling the flow rates of the aqueous solutions;

mixing the aqueous solutions while controlling a rotational speed of a propeller of the mixer to form fine, silver halide grains; and

immediately supplying the fine grains into the reaction vessel to perform said at least one of the nucleus formation and the crystal growth of silver halide grains in the reaction vessel, wherein the aqueous solution of the water-soluble silver salt and the aqueous solution of the water-soluble halide are previously diluted with a solution of a protective colloid, and then supplied to the mixer.

4. The process of producing a photographic emulsion according to claim 3, further wherein the aqueous solution of the water-soluble silver salt and the water-soluble halide are each previously mixed with the solution of the protective colloid in a second mixer and a third mixer, respectively, and added to the mixer.

17

# FIG. 1

FLOW METER
6a

# FIG. 2

MIXER

# FIG. 3

EP 0 374 853 A1

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-1472745 (AGFA-GEVAERT)<br>* the whole document *<br>--- | 1-4 | G03C1/015<br>C01G5/02 |
| X | CHEMICAL ABSTRACTS, vol. 108, no. 12, 21 March 1988<br>Columbus, Ohio, USA<br>page 163; ref. no. 97240N<br>& JP-A-62-275023 (Fuji) 30.11.1987<br>* abstract *<br>----- | 1-4 | |
| | | | TECHNICAL FIELDS SEARCHED (Int. Cl.5 )<br><br>G03C<br>C01G |

The present search report has been drawn up for all claims

| Place of search | Date of completion of the search | Examiner |
|---|---|---|
| THE HAGUE | 10 FEBRUARY 1990 | BUSCHA A.J. |